# EUROPÄISCHE PATENTSCHRIFT

(11) **EP 0 479 114 B1**
(45) Veröffentlichungstag und Bekanntmachung des Hinweises auf die Patenterteilung: **22.02.1995**
(21) Anmeldenummer: 91116387.1
(22) Anmeldetag: 26.09.1991
(51) Int. Cl.: B01D 46/52, B01D 46/12, B01D 46/10

(54) **Faltenfiltereinheit**
Folded filter unit
Unité de filtration pliée

(30) Priorität: 04.10.1990 CH 3196/90
(43) Veröffentlichungstag der Anmeldung: 08.04.1992
(73) Patentinhaber: LUWA AKTIENGESELLSCHAFT, CH-8047 Zürich (CH)
(72) Erfinder: Ebnöther, Guido, CH-8105 Watt (CH); Schier, Josef, CH-8964 Rudolfstetten (CH); Stratilek, Vaclav, CH-8953 Dietekon (CH)
(74) Vertreter: Patentanwälte Schaad, Balass, Menzl & Partner AG

(56) Entgegenhaltungen:
- DE-A- 1 916 155
- DE-A- 3 744 270
- US-A- 3 490 211
- US-A- 3 624 161
- US-A- 3 631 582

## Beschreibung

Die vorliegende Erfindung betrifft eine Faltenfiltereinheit gemäss dem Oberbegriff von Anspruch 1.

In der Lüftungstechnik werden zur Entfernung von festen und flüssigen Teilchen sogenannte Faserfilter eingesetzt. Die Faserfilter bestehen aus einem weichen Vlies aus Endlosfasern oder einem steiferen papierartigen Material. Vliese werden in Form von Taschen verwendet und eignen sich für niedrige bzw. mittlere Abscheidegrade. Papierfilter liegen in plissierter Form als sogenannte Faltenfilter vor. Solche Faltenfilter weisen verschiedene anwendungstechnische Vorteile auf, weshalb für viele Zwecke ausschliesslich Faltenfilter verwendet werden. Ein besonderer Vorteil ist die hohe Packungsdichte, die ein entsprechend grosses Speichervermögen zur Folge hat. Ein weiterer Vorteil des Faltenfilters ist die grössere und feinere Filterwirkung.

Die gefalteten Papierfilter, die auch als Matten bezeichnet werden, werden zur Vergrösserung der Filterfläche, bezogen auf den Strömungsquerschnitt, zick-zack- oder mäanderförmig angeordnet. Die einzelnen Matten einer solchen Anordnung, die an ihren Rändern verstärkt sind, werden partikeldicht miteinander verbunden und in Betriebsform - d.h. mit vorgegebenen Öffnungswinkeln zwischen den einzelnen Faltenfiltermatten - beim Hersteller in einen starren Filterrahmen eingesetzt und dort mittels einer dichten Verbindung festgehalten. Der starre Filterrahmen schützt die empfindlichen Faltenfiltermatten während des Transportes, Lagerung und der Montage vor mechanischer Beschädigung und erlaubt eine problemlose Montage bzw. einfaches Austauschen von gebrauchten Filtereinheiten gegen neue am Anwendungsort. Ausserdem dient er im Betrieb zur Übertragung von auf die Faltenfiltereinheit wirkenden Kräften auf einen weiteren bauseitigen Rahmen, in den er bei der Montage befestigt wird.

Aus der US-A 3,631,582 ist eine Filtereinheit bekannt, die anstelle in Zick-zack-Form angeordneter einzelner Filtermatten eine zick-zack-förmig gefaltete Faltenfilterbahn aufweist. Auch hier ist ein starrer Filterrahmen vorgesehen, der dieselbe Funktion erfüllt wie bei der oben beschriebenen Faltenfiltereinheit.

Da die Abmessungen solcher Faltenfiltereinheiten typischerweise 0,6 m x 0,6 m x 0,3 m bis 1,0 m betragen, ist sowohl der Transport als auch die Lagerung der erforderlichen Anzahl der bekannten Faltenfiltereinheiten aufwendig.

Weiterhin müssen erschöpfte Filtereinheiten entsorgt werden, was wiederum mit grossem Transportaufwand verbunden ist. Die Entsorgung erfolgt entweder auf einer Mülldeponie oder in einer Müllverbrennungsanlage. Dabei muss nicht nur die verschmutzte Filtermatte, sondern auch der Filterrahmen aus Kunststoff, Metall oder Holz und die Dichtungsmasse aus Kunststoff zwischen Filterrahmen und Filtermatte entsorgt werden.

Um das Transportvolumen zu vermindern, wurde bereits vorgeschlagen, die Filtermatten paarweise in V-Form in einen starren Rahmen einzubauen. Durch geeignetes Verstauen der übrigen kleineren Montageelemente in der Verpackung konnte das Transportvolumen etwa auf die Hälfte des Betriebsvolumens reduziert werden. Da die Erstellung der Betriebskonfiguration an Anwendungsort durch Zusammensetzen mehrerer solcher V-förmiger Elemente erfolgen muss, können sie nicht in die üblicherweise verwendeten bauseitigen Rahmen eingesetzt werden und ihre Montage bzw. ihr Austausch ist aufwendig. Ihre Entsorgung hat sich auch hier ausser mit dem Filter auch mit dem starren Rahmen und der Dichtungsmasse zu befassen.

Aufgabe der vorliegenden Erfindung ist es, eine Filtereinheit mit einer bereits beim Hersteller erstellten Betriebskonfiguration, jedoch gleichzeitig mit einem geringeren Transportvolumen vorzuschlagen, die beschädigungsfrei transportiert und problemlos in bestehende, d.h. für die herkömmlichen Filterrahmen bestimmte bauseitige Rahmen eingebaut werden kann.

Diese Aufgabe wird durch die kennzeichnenden Merkmale von Anspruch 1 gelöst. Besonders bevorzugte Ausführungsformen der Erfindung werden in den Ansprüchen 2 bis 12 beansprucht.

Als Folge der Verbindung der einzelnen Faltenfiltermatten mittels Scharniere liegen die Faltenfiltermatten zwar bereits in Betriebskonfiguration vor, ihr Abstand, d.h. der Öffnungswinkel, zwischen den zick-zackförmig miteinander verbundenen Faltenfiltermatten kann trotzdem beliebig variiert werden. Wenn der Abstand, d.h. der Öffnungswinkel, null beträgt, liegen die Faltenfiltermatten aufeinander, so dass das Volumen der Filtereinheit auf ein Minimum reduziert ist. Dies ist die bevorzugte Form für Transport und Lagerung. Nach der Entnahme der Filtereinheit aus der Verpackung kann, als Folge der Scharnierverbindung, der Abstand, d.h. der Öffnungswinkel, der Faltenfiltermatten nachfolgend Filtermatten beliebig vergrössert werden, um den bauseitig gegebenen Rahmen auszufüllen. Beim Einsatz der neuen Filtereinheit hat sich überraschendenweise gezeigt, dass sie keine grössere Beschädigungshäufigkeit aufweist als die bekannten Filtereinheiten, obwohl sie beim Transport, bei der Lagerung, Montage und im Betrieb keinen mit den Filtermatten starr und fest verbundenen Rahmen aufweist, der die auf die Filtermatten einwirkenden Kräfte aufnimmt.

Sowohl aus fabrikations- als auch aus anwendungstechnischen Gründen hat sich die Integration der Scharniere in Stege, über die die aneinanderstossenden Ränder der Filtermatten verbunden sind, als vorteilhaft erwiesen. Filmscharniere aus Kunststoff sind hierfür besonders geeignet. Sie lassen sich problemlos mit den Stegen, insbesondere solchen aus Kunststoff, verbinden und mit letzterem entsorgen. Luftdurchlässige Scharniere mit einem den Filtermatten entsprechenden Abscheidegrad ergeben eine ununterbrochene gleichbleibende Filterwirkung über die ganze Filtereinheit. Solche luftdurchlässigen Scharniere aus Vlies oder Gewebe, aber auch Filmscharnieren können direkt an den Filtermatten befestigt werden.

Jene Ränder der Filtermatten, die parallel zur Strömungsrichtung liegen, d.h. jene, die im aufgefalteten Zustand ein V bilden, sind vorzugsweise mittels eines biegsamen Flächengebildes partikeldicht miteinander verbunden. Da es ausreichend ist, wenn das Flächengebilde im Bereich von vorbestimmten Faltlinien mittels Scharniere verbunden ist, können neben Vliessen, Geweben, Folien und Kombinationen von letzteren auch steifere Materialien eingesetzt werden.

Die Befestigung der erfindungsgemässen Faltenfiltereinheit am bauseitigen Rahmen kann mit rahmenseitigen, filterseitigen und/oder individuellen Befestigungsmitteln erfolgen.

Bevorzugt werden an Aussenkanten der Faltenfiltereinheit angeordnete Befestigungsmittel, wie Druckknöpfe, Klebeverbindungen, Hacken und Ösen oder Klettverschlüsse, deren Gegenstück am bauseitigen Rahmen angeordnet ist. Vorteilhaft sind solche Befestigungsmittel an parallelen Aussenkanten angeordnet.

Die Befestigungsmittel können an Dichtungsbändern, die z.B. an den bedienseitigen Aussenkanten der Faltenfiltereinheit angeordnet sind, vorgesehen werden. Diese Bänder werden beim Befestigen der Faltenfiltereinheit am bauseitigen Rahmen umgebogen und bilden eine Labyrinthdichtung. Es sind auch vorgebildete Labyrinthdichtungen geeignet.

Die Randbereiche der einzelnen Filtermatten können auf bekannte Art und Weise, z.B. mittels eines flüssig aufgetragenen und ausgehärteten Kunststoffes, verstärkt sein. Diese Massnahme ist nicht unbedingt erforderlich, insbesondere dann nicht, wenn die Filtermatten eine genügend hohe Eigenfestigkeit aufweisen.

Die erfindungsgemässe Faltenfiltereinheit kann eine höhere Anzahl an Einzelmatten aufweisen als in einem gegebenen Fall erforderlich. Dadurch kann das Auswechseln der Filter durch einfaches Nachschieben erfolgen. Das Nachschieben erfolgt entweder indem auf einmal nur ein Teil der Faltenfiltereinheit oder die Gesamtheit der benützten Faltenfiltermatten ausgewechselt werden.

Die Falten der Filtermatten können entweder parallel zu den Scharnieren oder senkrecht dazu angeordnet werden. Bevorzugt wird die erste Ausführungsform.

Die erfindungsgemässe Faltenfiltereinheit wird bedienseitig, z.B. zuluftseitig, in einem bauseitigen Rahmen eingesetzt und dort befestigt. Dieser bauseitige Rahmen kann zweiteilig ausgebildet sein, wobei der erste Rahmenteil im Bau fest verankert ist, und der zweite bedienseitige Rahmenteil mittels Befestigungselementen am ersten Teil lösbar befestigt ist. Dieser zweite Teil ist zum Festhalten der Faltenfiltereinheit bestimmt und weist entsprechende Befestigungsmittel auf. Dieser zweite Teil des bauseitigen Rahmens ermöglicht es auch, bestehende bauseitige Rahmen, die bisher mit einer Filtereinheit gemäss dem Stand der Technik ausgerüstet wurden, mit der erfindungsgemässen Faltenfiltereinheit auszurüsten.

Der zweite Teil des bauseitigen Rahmens kann eine Reihe von Distanzelementen aufweisen, die zur Festlegung des Abstandes, d.h. der Öffnungswinkel, der Filtermatten der erfindungsgemässen Faltenfiltereinheit im Betriebszustand gewährleisten. Diese Distanzelemente sind abluftseitig am zweiten Teil des Rahmens angeordnet und ragen darüber hinaus. Der zweite Teil des bauseitigen Rahmens kann seinerseits zweiteilig ausgeführt sein.

Mechanische empfindlichere Filtermaterialien werden vorteilhaft am Scharnier verstärkt. Auch eine solche Filtereinheit weist vorzugsweise zwischen aneinander anschliessenden Filtermattenbereichen eine partikeldichte Verbindung mittels eines Flächengebildes, Dichtungsmittel zur Bildung einer Labyrinthdichtung und Verfestigungsmittel auf. Sie kann an ihren Randbereichen ebenfalls verstärkt sein.

Die Erfindung bzw. der Stand der Technik wird nachfolgend mit Hilfe der Figuren 1 bis 10 veranschaulicht. Es zeigen rein schematisch
- Fig. 1: eine perspektivische Ansicht einer Faltenfiltermatte;
- Fig. 2: eine Faltenfiltereinheit gemäss dem Stand der Technik;
- Fig. 3: eine weitere Faltenfiltereinheit gemäss dem Stand der Technik;
- Fig. 4: eine perspektivische Ansicht einer erfindungsgemässen Faltenfiltereinheit in zusammengefaltetem Zustand;
- Fig. 5: eine perspektivische Ansicht einer erfindungsgemässen Faltenfiltereinheit in auf- oder auseinandergefaltetem Zustand;
- Fig. 6: Ausschnitt aus einer perspektivischen Ansicht eines Teils einer erfindungsgemässen Faltenfiltereinheit mit einem Teil eines bauseitigen Rahmen;
- Fig. 7: Ausschnitt aus einer perspektivischen Ansicht einer erfindungsgemässen Faltenfiltereinheit mit einem Teil eines bauseitigen Rahmens;
- Fig. 8: eine perspektivische Ansicht eines vergrösserten Teils einer erfindungsgemässen Faltenfiltereinheit;
- Fig. 9: eine perspektivische Ansicht eines bauseitigen Rahmenteils zur Anordnung der erfindungsgemässen Faltenfiltereinheit; und
- Fig. 10: eine perspektivische Ansicht einer erfindungsgemässen Faltenfiltereinheit am bauseitigen Rahmen angeordnet.

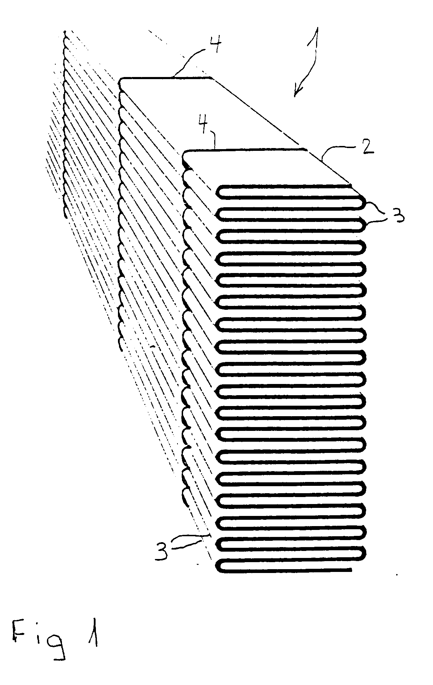

Die Faltenfiltermatte 1 in Fig. 1 besteht aus einem mäanderförmig gefalteten Papierfilter 2, deren Falten 3 mittels fadenförmigen mit dem Papierfilter 2 verbundenen Abstandhaltern 4 in einer festen relativen Anordnung zueinander gehalten werden. Selbstverständlich ist auch eine zick-zack-förmige Faltung möglich.

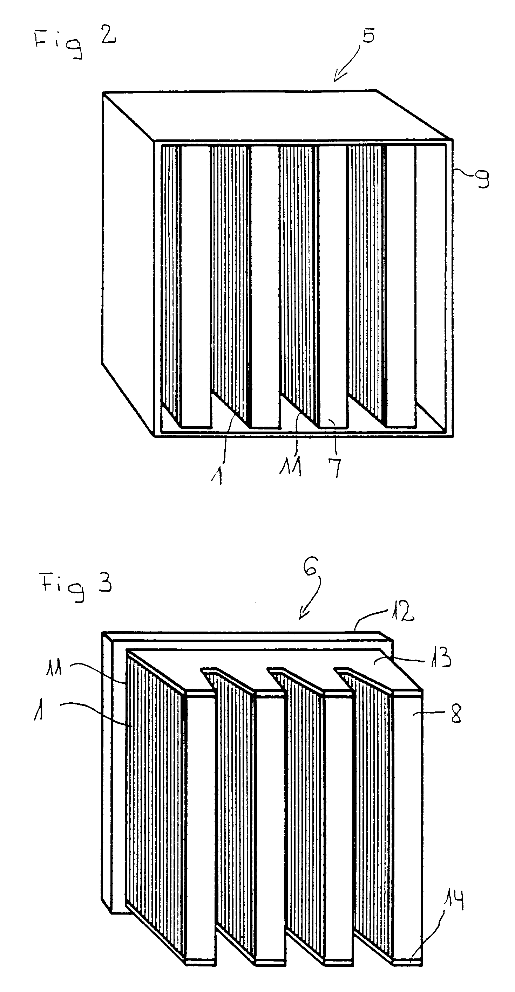

Die Filtermatten 1 in den Fig. 2 und 3, welche Faltenfiltereinheiten 5 und 6 gemäss dem Stand der Technik darstellen, liegen in einer starren zick-zackförmigen Anordnung vor. Aneinander stossende Filtermatten 1 sind mittels fester Stege 7, 8 miteinander verbunden. Die Faltenfiltereinheit 5 in Fig. 2 ist von einem kastenartigen Rahmen 9 umgeben. Die Stege 7 und die an den Rahmen 9 stossenden Ränder 11 der Faltenfilter sind luftdicht mit diesem verbunden.

Die Faltenfiltereinheit 6 gemäss dem Stand der Technik gemäss Fig. 3 weist einen Profilrahmen 12 auf, der sowohl mit den anschliessenden Rändern 11 der Faltenfiltermatten 1 als auch mit einem oberen und einem unteren Abschlusselelemt 13, 14, für den von den zick-zackförmigen Filtermatten umschlossenen Raum, luftdicht verbunden ist. Ebenfalls luftdicht verbunden sind die Filtermatten mit dem oberen und dem unteren Abschlusselement 13 und 14.

Beide Faltenfiltereinheiten gemäss dem Stand der Technik weisen ein hohes Transport- und Lagervolumen auf. Für ihre Herstellung müssen im Filterprozess nicht direkt benützte Materialien eingesetzt und nach der Verwendung entsorgt werden.

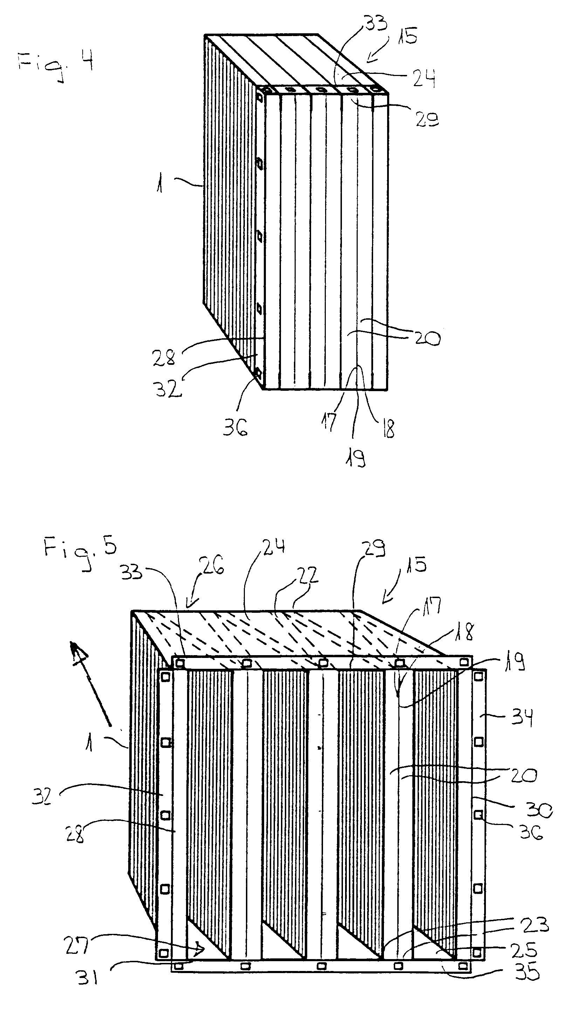

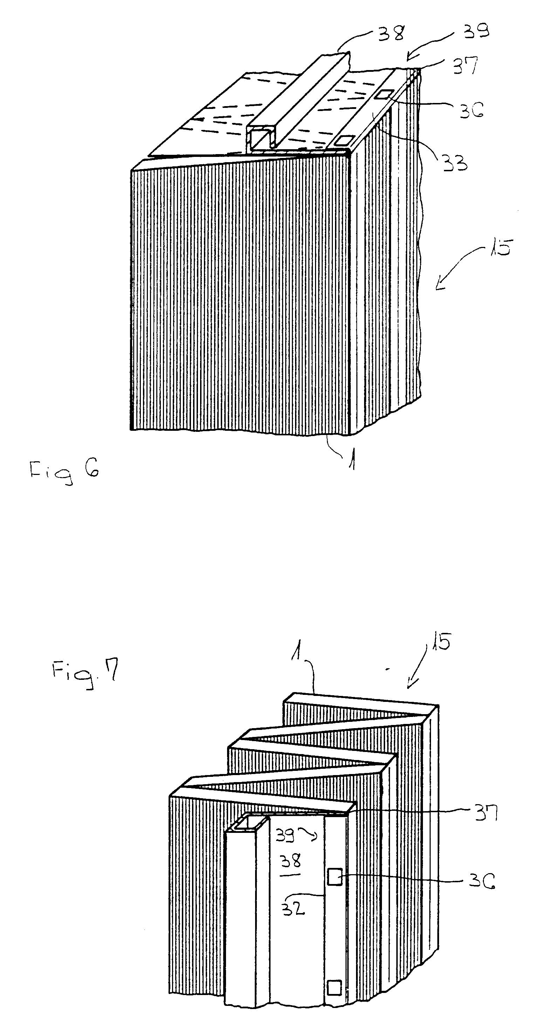

Die erfindungsgemässe Faltenfiltereinheit 15 weist je acht Faltenfiltermatten 1 auf (Fig. 4, 5). Die aneinanderstossenden Kanten 17, 18 der Faltenfiltermatten 1 sind mittels eines Scharniers 19 miteinander verbunden. Dieses Scharnier 19 wird im dargestellten Fall von einem auf die zwei an die Kanten 17, 18 anschliessenden Rändern 20 der Filtermatten 1 applizierten Vlies gebildet.

Die zur Strömungsrichtung, die mit einem Pfeil angezeigt ist, parallelen oberen und unteren Rändern 22, 23 der Filtermatten sind von je einer luftdichten biegsamen Folie 24, 25 abgedeckt. Die Folien 24 und 25 sind mit dem Mattenkopf und dem Mattenfuss 26, 27 luftdicht verbunden. Im zusammengefalteten Zustand (Fig. 4) befindet sich der gefaltete Teil der Folien 24, 25 in gefaltetem Zustand zwischen den Filtermatten 1. In auseinandergefaltetem Zu stand sind die Folien 24, 25 (Fig. 5) gestreckt.

An den äusseren bedienseitigen Kanten 28, 29, 30, 31 der Faltenfiltereinheit 15 sind Bänder 32, 33, 34, 35 angeordnet, welche Befestigungsmittel 36, in diesem Fall Klettenverbindungen, tragen. Die Bänder 32 bis 35 werden, wie aus den Fig. 6 und 7 ersichtlich ist, beim Befestigen der Faltenfiltereinheit 15 um die bedienseitigen Kanten 37 eines bauseitigen Rahmens 38 gebogen, an entsprechenden (nicht dargestellten) Befestigungsteilen dort befestigt und bilden eine Labyrinthdichtung 39.

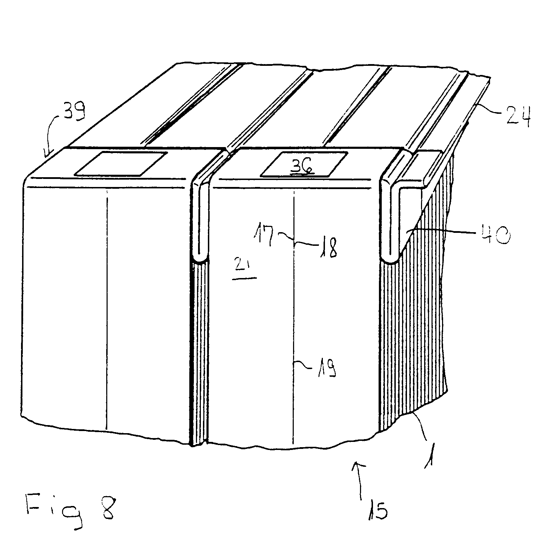

Die Anordnung der mattenkopfseitigen Folie 24 bei gefaltetem Zustand der Faltenfiltereinheit 15 ist besonders gut aus Fig. 8 ersichtlich. Hier zeigt sich auch, dass der zwischen den Filtermatten zuliegenkommende Teil 40 der Folie 24 in zusammengefaltetem Zustand der Faltenfiltereinheit als Abstandhalter zwischen den Filtermatten 1 funktioniert und eine zusätzliche Sicherung gegen Beschädigung beim Lagern und Transportieren bildet.

Aus Fig. 8 ist weiterhin ersichtlich, dass kopfseitig des Scharniers 19 zwischen den aneinanderstossenden Kanten 17, 18 der Faltenfiltereinheit bildende Vlies 21 über die kopfseitige (bzw. nicht dargestellt fusseitige) Kante hinausgeführt ist und über die Folie 24 zu liegen kommt, wo sie einerseits das befestigungsmittel 36 trägt und andererseits im umgebogenen Zustand die Labyrinthdichtung 39 bildet.

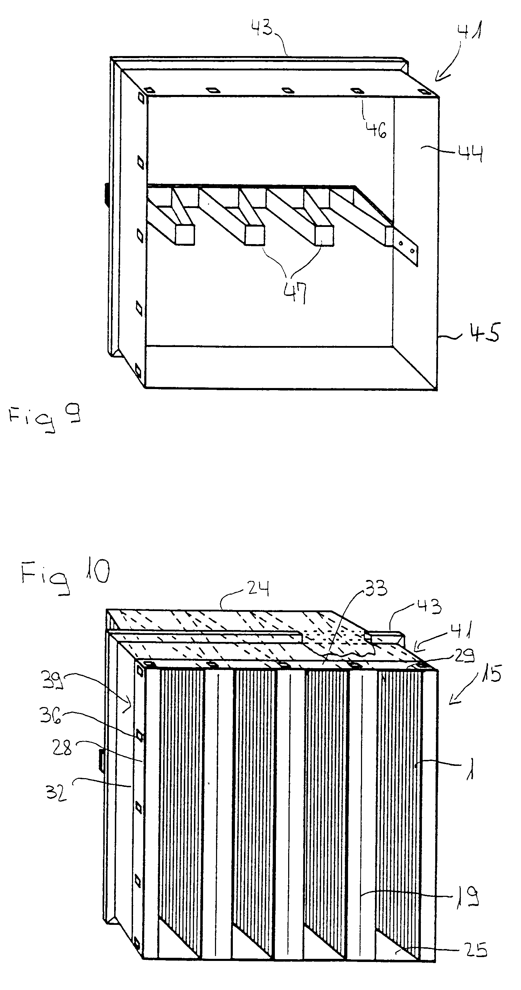

Der in Fig. 9 dargestellte filterseitige zweite Teil 41 eines bauseitigen Rahmens weist einen dem bauseitigen ersten Teil (nicht dargestellt) zugewandten Profilrahmen 43 und einen daraus anschliessenden flächigen Rahmenteil 44 auf. Am bedienseitigen Umfang 45 des zweiten Teilrahmens 41 sind Befestigungselemente 46 angeordnet, die gegengleich zu dem Befestigungselement 36 an der Faltenfiltereinheit ausgebildet sind. Im zweiten Teilrahmen 41 sind eine Reihe von trapezförmigen Distanzelementen 47 befestigt, die über den zweiten Teilrahmen 41 abluftseitig, d.h. bauseitig, hinausragen und im montierten Zustand in den ersten Teilrahmen hineinragen. Diese Distanzelemente 47 sichern die gleichbleibende Distanz zwischen den einzelnen Filtermatten 1 im auseinandergefalteten montierten Zustand die in Fig. 10 dargestellt ist. In dieser Figur sind bereits in den anderen Figuren vorkommende Teile mit denselben Ziffern bezeichnet.

Selbstverständlich sind auch andere Ausführungsformen der erfindungsgemässen Faltenfiltereinheit möglich. Beispielsweise können die einzelnen Filtermatten an ihren Rändern durch ein Bindemittel verstärkt sein.

Die Filterfalten der Faltenfilter können anstatt parallel zum Scharnier senkrecht zu letzterem verlaufen.

Anstatt einer Labyrinthdichtung kann eine Elastomerdichtung oder eine Adhäsionsdichtung zwischen Faltenfiltereinheit und bauseitigem Rahmen eingesetzt werden.

Der bauseitige Rahmen kann ohne Distanzelemente ausgebildet werden, wobei in diesem Fall vorzugsweise die Scharniere der Einzelelemente in steife Stege integriert sind.

## Patentansprüche

1. Faltenfiltereinheit für die Luftfiltration, die zur Anordnung in einem bauseitigen Rahmen bestimmt ist, mit in zick-zackförmiger Anordnung miteinander verbundenen Faltenfiltermatten (1), dadurch gekennzeichnet, dass die einzelnen Faltenfiltermatten (1) an ihren aneinanderstossenden Kanten (17, 18) mittels Scharniere (19) auf- und zusammenfaltbar miteinander verbunden sind.

2. Faltenfiltereinheit nach Anspruch 1, dadurch gekennzeichnet, dass die aneinander anschliessenden Ränder (22, 23) der Faltenfiltermatten über Stege (7) verbunden sind, in die die Scharniere (19) integriert sind.

3. Faltenfiltereinheit nach einem der vorangehenden Ansprüche, dadurch gekennzeichnet, dass die Scharniere (19) Filmscharniere sind.

4. Faltenfiltereinheit nach einem der vorangehenden Ansprüche, dadurch gekennzeichnet, dass die Scharniere (19) zwischen den einzelnen Faltenfiltern (1) luftdurchlässig sind und vorzugsweise mindestens denselben Abscheidegrad wie die Faltenfiltermatten aufweisen.

5. Faltenfiltereinheit nach einem der vorangehenden Ansprüche, dadurch gekennzeichnet, dass jene Ränder (22, 23) aneinander anschliessender Faltenfiltermatten (1), die im aufgefalteten Zustand ein V bilden, mittels eines mindestens im Bereich von vorbestimmten Faltlinien biegsamen Flächengebilden (24, 25) partikeldicht miteinander verbunden sind.

6. Faltenfiltereinheit nach einem der vorangehenden Ansprüche, dadurch gekennzeichnet, dass sie Dichtungsmittel (32, 33, 34, 35) besitzt, die zur Bildung einer dichtenden Verbindung, vorzugsweise einer Labyrinthdichtung (39), mit einem bauseitigen Rahmen (36) bestimmt sind.

7. Faltenfiltereinheit nach einem der vorangehenden Ansprüche, dadurch gekennzeichnet, dass sie an ihren Aussenkanten (28, 29, 30, 31), vorzugsweise an ihrem Dichtungsmittel (32, 33, 34, 35), Befestigungsmittel (36) trägt.

8. Faltenfiltereinheit nach einem der vorangehenden Ansprüche, dadurch gekennzeichnet, dass die einzelnen Faltenfiltermatten (1) an ihren Rändern verstärkt sind.

9. Faltenfiltereinheit nach einem der vorangehenden Ansprüche, dadurch gekennzeichnet, dass sie mindestens das zweifache der erforderlichen Anzahl an miteinander verbundenen Faltenfiltermatten aufweist, um einen Filteraustausch durch lückenloses Nachschieben zu gewährleisten.

10. Faltenfiltereinheit nach einem der vorangehenden Ansprüche, dadurch gekennzeichnet, dass die Faltenfiltermatten mit ihrer Faltung parallel zum Scharnier der Faltenfiltermatten angeordnet sind.

11. Faltenfiltereinheit nach einem der vorangehenden Ansprüche, die in einem bauseitigen Rahmen angeordnet ist, dadurch gekennzeichnet, dass er aus einem fest im Bau verankerten rahmenförmigen ersten Teil und einem bedienseitig am ersten Teil mittels Befestigungselemente anzuordnenden rahmenförmigen zweiten Teil (41) besteht, wobei der zweite Teil die Faltenfiltereinheit festhält.

12. Faltenfiltereinheit nach Anspruch 11, dadurch gekennzeichnet, dass der zweite Teil (41) des Rahmens abluftseitig eine Reihe von über den zweiten Teil hinausragende Distanzelemente (47) für die Zick-Zackanordnung der Faltenfiltereinheit (15) mit vorbestimmtem Öffnungswinkel aufweist.

## Claims

1. A folded filter unit for air filtration that is intended to be arranged in a frame on the side of the building, with folded filter mats (1) which are interconnected in a zigzag-shaped arrangement, characterized in that the individual folded filter mats (1) are connected to each other at their abutting edges (17, 18) by means of hinges (19) in a way that allows them to be unfolded and folded together.

2. A folded filter unit according to claim 1, characterized in that the edges (22, 23), adjoining each other, of the folded filter mats are connected by means of cross members (7) into which the hinges (19) are integrated.

3. A folded filter unit according to one of the preceding claims, characterized in that the hinges (19) are film hinges.

4. A folded filter unit according to one of the preceding claims, characterized in that the hinges (19) are permeable to air between the individual folded filters, and preferably have at least the same filtration efficiency as the folded filter mats.

5. A folded filter unit according to one of the preceding claims, characterized in that those edges (22, 23) of folded filter mats (1) adjoining each other which form a V in the unfolded state, are connected to each other in a particle-proof manner by means of a flat-shaped element (24, 25) that is flexible, at least in the zone of predetermined fold lines.

6. A folded filter unit according to one of the preceding claims, characterized in that it has sealing means (32, 33, 34, 35) which are intended to form a sealing joint, preferably a labyrinth seal (39), with a frame (36) on the building side.

7. A folded filter unit according to one of the preceding claims, characterized in that it carries mounting means (36) on its outer edges (28, 29, 30, 31), preferably on its sealing means (32, 33, 34, 35).

8. A folded filter unit according to one of the preceding claims, characterized in that the individual folded filter mats (1) are reinforced at their edges.

9. A folded filter unit according to one of the preceding claims, characterized in that it has at least twice the required number of interconnected folded filter mats so as to ensure a filter change by an uninterrupted replacement.

10. A folded filter unit according to one of the preceding claims, characterized in that the folded filter mats are arranged with their fold parallel to the hinge of the folded filter mats.

11. A folded filter unit according to one of the preceding claims, which is arranged in a frame on the building side, characterized in that it consists of a frame-shaped first part fixedly anchored in the building, and a frame-shaped second part (41) to be arranged on the service side on the first part by means of mounting elements, in which arrangement the second part secures the folded filter unit.

12. A folded filter unit according to claim 11, characterized in that the second part (41) of the frame has on the waste air side a row of distance elements (47) projecting beyond the second part, for the zigzag arrangement of the folded filter unit (15) with a predetermined opening angle.

## Revendications

1. Unité de filtration pliée, pour la filtration de l'air, conçue pour être montée dans un cadre situé côté construction avec des matelas filtrant pliés (1) reliés ensemble en disposition en zigzag, caractérisée en ce que les matelas filtrants pliés (1) sont reliés ensemble matelas par matelas à leurs arêtes (17,18) au moyen de charnières (19) de manière à pouvoir être déployés et repliés.

2. Unité de filtration pliée selon la revendication 1, caractérisée en ce que les bords (22, 23) se raccordant les uns les autres des matelas filtrant pliés sont reliés par des traverses (17), dans lesquelles sont intégrées les charnières (19).

3. Unité de filtration pliée selon l'une des revendications précédentes, caractérisée en ce que les charnières (19) sont des charnières-films.

4. Unité de filtration pliée selon l'une des revendications précédentes, caractérisée en ce que les charnières (19) sont perméables à l'air entre les différents filtres pliés (1) et présentent de préférence au moins le même degré de filtration que les matelas filtrant pliés.

5. Unité de filtration pliée selon l'une des revendications précédentes, caractérisée en ce que chacun des bords (22, 23) des matelas filtrants pliés (1) se raccordant les uns aux autres, qui constituent un V lorsqu'ils sont à l'état déployé, sont reliés les uns aux autres d'une façon étanche aux particules, au moyen de structures de surface (24, 25) pliables au moins dans la zone de ligne de pliage prédéterminée.

6. Unité de filtration pliée selon l'une des revendications précédentes, caractérisée en ce qu'elle comporte des moyens d'étanchéité (32, 33, 34, 35), conçus pour constituer une liaison étanche, de préférence un joint labyrinthe (39) avec un cadre (36) situé côté construction.

7. Unité de filtration pliée selon l'une des revendications précédentes, caractérisée en ce qu'elle porte sur ses arêtes extérieures (28, 29, 30, 31), de préférence sur son moyen d'étanchéité (32, 33, 34, 35), un moyen de fixation (36).

8. Unité de filtration pliée selon l'une des revendications précédentes, caractérisée en ce que les différents matelas filtrants pliés (1) sont renforcés sur leurs bords.

9. Unité de filtration pliée selon l'une des revendications précédentes, caractérisée en ce qu'elle présente au moins un nombre de matelas filtrants pliés, reliés ensemble, double du nombre nécessaire pour assurer un remplacement des filtres par coulissement, les uns à la suite des autres, sans constituer de lacune.

10. Unité de filtration pliée selon l'une des revendications précédentes, caractérisée en ce les matelas filtrants pliés sont disposés avec leurs plis parallèles à la charnière des matelas filtrants pliés.

11. Unité de filtration pliée selon l'une des revendications précédentes, disposée dans un cadre situé côté construction, caractérisée en ce qu'elle est composée d'une première partie en forme de cadre ancrée à demeure dans la construction et d'une deuxième partie (41) en forme de cadre située du côté du maniement à disposer sur la première partie au moyen d'éléments de fixation, la deuxième partie assurant la fixation de l'unité de filtration pliée.

12. Unité de filtration pliée selon la revendication 11, caractérisée en ce que la deuxième partie (41) du cadre présente du côté de l'évacuation d'air une rangée d'éléments d'espacement (47) se projetant au-delà de la deuxième partie destinée à disposer en Zigzag l'unité de filtration pliée (15) avec un angle d'ouverture prédéterminé.
